Europäisches Patentamt

European Patent Office

Office européen des brevets

(11) Publication number: **0 210 855**
A2

# (12) EUROPEAN PATENT APPLICATION

(21) Application number: **86305763.4**

(22) Date of filing: **25.07.86**

(51) Int. Cl.⁴: **G 11 B 13/04**
**G 11 B 11/10, G 11 B 5/66**

(30) Priority: **26.07.85 JP 166326/85**
**28.11.85 JP 267780/85**

(43) Date of publication of application:
**04.02.87 Bulletin 87/6**

(84) Designated Contracting States:
**DE FR GB NL**

(71) Applicant: **SONY CORPORATION**
**7-35 Kitashinagawa 6-Chome Shinagawa-ku**
**Tokyo 141(JP)**

(72) Inventor: **Sato, Noboru c/o Patents Division**
**Sony Corporation 6-7-35 Kitashinagawa**
**Shinagawa-ku Tokyo 141(JP)**

(74) Representative: **Cotter, Ivan John et al,**
**D. YOUNG & CO. 10 Staple Inn**
**London WC1V 7RD(GB)**

(54) Magneto-optical recording media.

(57) A magneto-optical recording medium comprises a substrate (1) and a magnetic layer (4) formed on the substrate. The magnetic layer has a multilayered structure in which rare earth metal element layers (2) and transition metal element layers (3) are alternately superposed with each other, with a layer thickness of the order of an atomic layer. The thickness of the rare earth metal element layers (2) is selected to be not less than 2 Angstroms but less than 6 Angstroms.

FIG. I

EP 0 210 855 A2

1

# MAGNETO-OPTICAL RECORDING MEDIA

This invention relates to magneto-optical recording media.

A magneto-optical recording technique is known in which a signal is recorded on a magneto-optical recording layer having perpendicular magnetic anisotropy in the form of a direction of magnetisation and the signal thereby recorded is reproduced by irradiation with a linearly polarised light beam and detecting the rotation of polarisation caused by the interaction with the magnetisation. One example of the magneto-optical recording layer is formed of an amorphous alloy of a rare earth element and a transition metal element.

In their US Patent No US-A-4 576 699, the applicants have proposed an improved magneto-optical recording medium having a multi-layer structure formed of rare earth and the transition metal elements. The magneto-optical recording medium had a coercive force and rectangular ratio which were improved with respect to the known magneto-optical recording medium having a uniform mixture of rare earth and transition metal elements.

According to one aspect of the invention there is provided a magneto-optical recording medium comprising a substrate and a magnetic layer formed on the substrate, wherein the magnetic layer is formed of multi-layers of rare earth metal element layers and transition metal element layers which are alternately superposed with each other, wherein each of the rare earth metal element layers has a thickness of not less than 2 Angstroms but less than 6 Angstroms, and wherein the magnetic layer has a composition containing 10 to 40 atomic % of the rare earth metal element or elements, and a residue of the transition metal element or elements, excluding a compensation composition of the rare earth element or elements and the transition metal element or elements.

According to another aspect of the present invention there is provided a magneto-optical recording medium which comprises a substrate and a magneto-optical recording layer formed on the substrate, wherein the magneto-optical recording layer is formed of multi-layers of rare earth element and transition metal element layers alternately superposed with a thickness of each rare earth element layer being not less than 2 Angstroms but less than 6 Angstroms, and wherein magneto-optical recording layer has a composition containing 10 to 40 atomic % of rare earth element excluding the compensation composition of the alloy.

Preferred embodiments of the present invention described hereinbelow provide a magneto-optical recording medium in which the recording layer has an artificially layered structure of rare earth and transition metal elements having an amorphous state.

The invention will now be further described, by way of illustrative and non-limiting example, with reference to the accompanying drawings, in which:

Figure 1 is a schematic enlarged cross-sectional illustration of a magneto-optical recording medium embodying the present invention;

Figure 2 is a schematic cross-sectional view of a sputtering apparatus employed in manufacturing a magneto-optical recording medium embodying the present invention;

Figure 3 is a plan view on an enlarged scale of the apparatus shown in Figure 2;

Figure 4 is a small angle X-ray diffraction pattern for a magneto-optical recording layer embodying the present invention;

Figure 5 is a graph showing a relationship between the thickness of a terbium (Tb) layer and various magnetic characteristics;

Figures 6 to 8 show magnetisation curves for recording media having rare earth element and transition metal element layers having various thicknesses;

Figure 9 is a small angle X-ray diffraction pattern for a magneto-optical recording layer embodying the present invention;

Figure 10 is a graph showing a relationship between cobalt content (y) and various characteristics; and

Figure 11 is a graph showing a relationship between rare earth element composition and various characteristics.

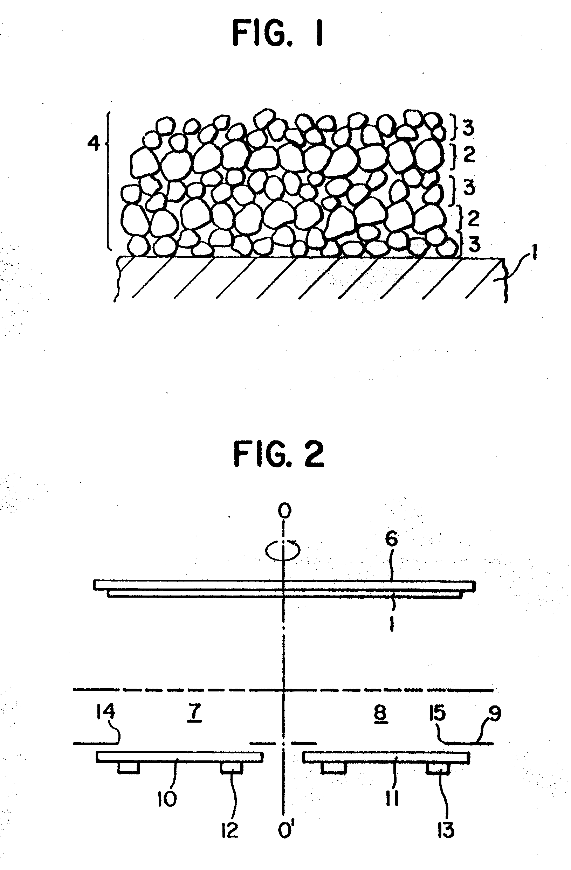

Figure 1 is a schematic cross-sectional illustration of a magneto-optical recording medium embodying the present invention. The recording medium comprises a substrate 1 made of, for example, glass, acrylic resin or polycarbonate resin, on which is provided a magnetic layer 4 for magneto-optical recording, the layer 4 having magnetic anisotropy perpendicular to a surface of the layer. The magnetic layer 4 is formed of multi-layers of rare earth metal element layers 2, made of one or more of terbium (Tb), dysprosium (Dy), and gadolinium (Gd), and transition metal element layers 3, made of one or more of iron (Fe), cobalt (Co) and nickel (Ni), the layers 2 and 3 being alternately superposed with each other. The rare earth metal element layers 2 and the transition metal element layers 3 are each extremely thin, having a thickness of the order of an atomic layer, and the rare earth element layer thickness is selected to be not less than 2 Angstroms but less than 6 Angstroms. Each of the rare earth metal elements Tb, Dy, and Gd has an atomic radius of about 3.5 Angstroms, whereby the above thickness of the rare earth metal elements layers corresponds to the order of a mono-atomic layer or two atomic layers.

The magnetic layer 4 is formed of a composition of 10 to 40 atomic % of the rare earth metal element or elements and a residue of the transition metal element or elements. However, the so-called "compensation composition" at room temperature is excluded from the above compositional range of the magnetic layer 4. In this connection, as explained above, the ferrimagnetic layer 4 is formed of at least one rare earth metal element and at least one transition metal element. The magnetic moment of the rare earth metal element points in one direction, while the magnetic moment of the transition metal element points in the opposite direction. The magnetisation observed outside of the layer 4 is the vector sum of the magnetic moments. Thus, at the "compensation composition", the total magnetic moment of the rare earth atoms is equal to the total magnetic moment of the transition metal atoms, whereby, at the compensation composition, the magnetisation is equal to zero as observed outside of the layer 4. At the compensation composition, the coercive force of the magnetic layer has an infinite value, which is not suitable for magnetic recording. The compensation composition therefore is excluded from the composition range of 10 to 40 atomic % of rare earth. The compensation composition will depend upon the elements employed. The compensation composition for a Tb-Fe alloy layer 4 is obtained when the Tb composition is 22 to 23 atomic %. The compensation composition for a Gd-Fe system layer 4 is obtained when the Gd composition is 25 to 26 atomic %. The compensation composition for a Dy-Fe system layer 4 is obtained when the Dy composition is 25 to 26 atomic %.

Magneto-optical recording media of the construction just described have high uniaxial magnetic anisotropy, high magnetisation and high coercive force, and magneto-optical recording of high density can be achieved. It is believed that, in the layered structure of the magneto-optical recording layer, a basic structure formed of one rare earth metal atom and two transition metal atoms are coupled and arranged along the direction of the thickness of the layers, thereby efficiently deriving a perpendicular anisotropy in the layer.

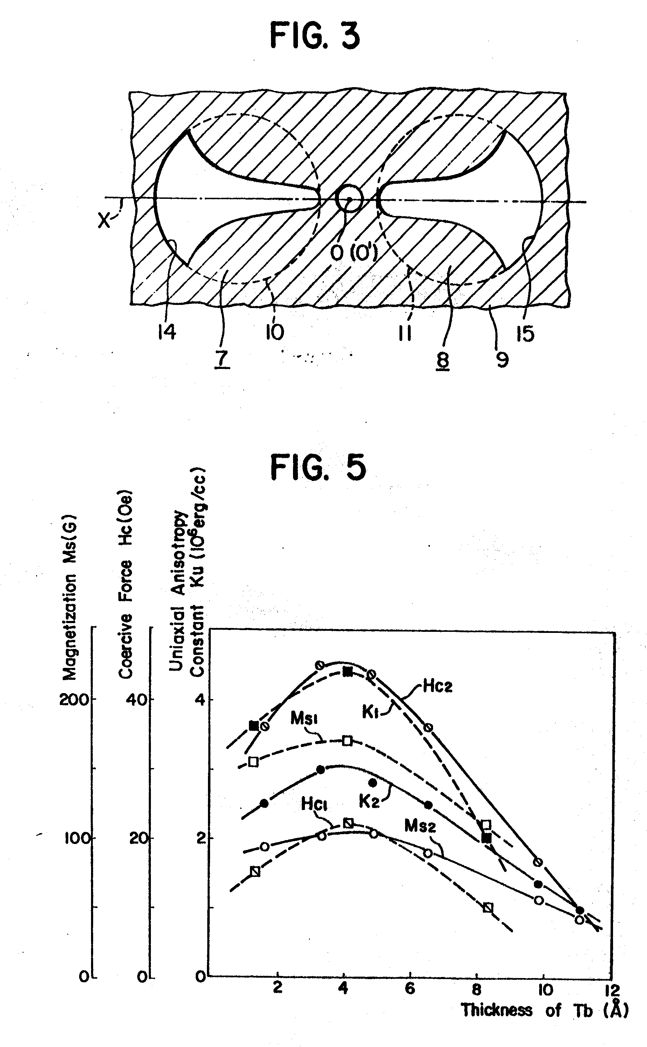

The magnetic layer 4 can be manufactured by sputtering using a spluttering apparatus shown in Figures 2 and 3. The apparatus includes a substrate holder 6 which is rotated around an axis O - O'. A substrate 1, on which a magnetic layer is to be formed, is mounted on a lower surface of the substrate holder 6. A pair of sputtering sources 7 and 8 are disposed in opposed relation to the substrate 1 with an equal angular spacing of $180^{o}$ about the axis O - O'. A mask 9 is disposed between the sputtering sources 7 and 8 and the substrate 1 to restrict the area of deposition on the substrate 1 from the sputtering sources 7 and 8. The sputtering source 7 includes a target 10 formed of a disc-shaped plate composed of a rare earth metal element, for example Tb, while the sputtering source 8 includes a target 11 formed of a disc-shaped plate of, for example, iron or an alloy thereof. Magnets 12 and 13 are located beneath the targets 10 and 11. The whole structure is enclosed in an evacuated bell jar (not shown).

As shown in Figure 3, the mask 9 is provided at positions opposite to the targets 10 and 11 with a pair of windows 14 and 15 which are bell-shaped and become wider in directions towards the ends of a straight line x which passes through the centres of the targets 10 and 11. The rare earth metal is deposited from the target 10 mainly at the left hand portion of the substrate 1, through the window 14, and the transition metal is deposited from the target 11 mainly at the right hand portion of the substrate 1, through the window 15. DC sputtering is carried out while the substrate holder 6, together with the substrate 1, is rotated around the axis O - O', while the targets 10 and 11 are held at negative potential. Thus, by rotating the substrate 1, the multi-layer structure of the magnetic layer 4 is deposited, the layer 4 having a total thickness ranging from 200 to 50,000 Angstroms, for example 1,000 Angstroms.

Examples of magneto-optical recording media will now be described.

Example 1

A magnetic layer was formed on a glass substrate by using the sputtering apparatus of Figures 2 and 3. The composition of the layer was 19 atomic % of Tb and 81 atomic % of Fe. The target 10 was formed of Tb and the target 11 was formed of Fe. Sputtering currents for the targets 10 and 11 were 0.6A and 2.5A, respective, and the deposition rates of Tb and Fe were about 1.5 Angstroms per second and about 2.6 Angstroms per second with the above sputtering currents. The substrate was rotated at a speed of 20 revolutions per minute.

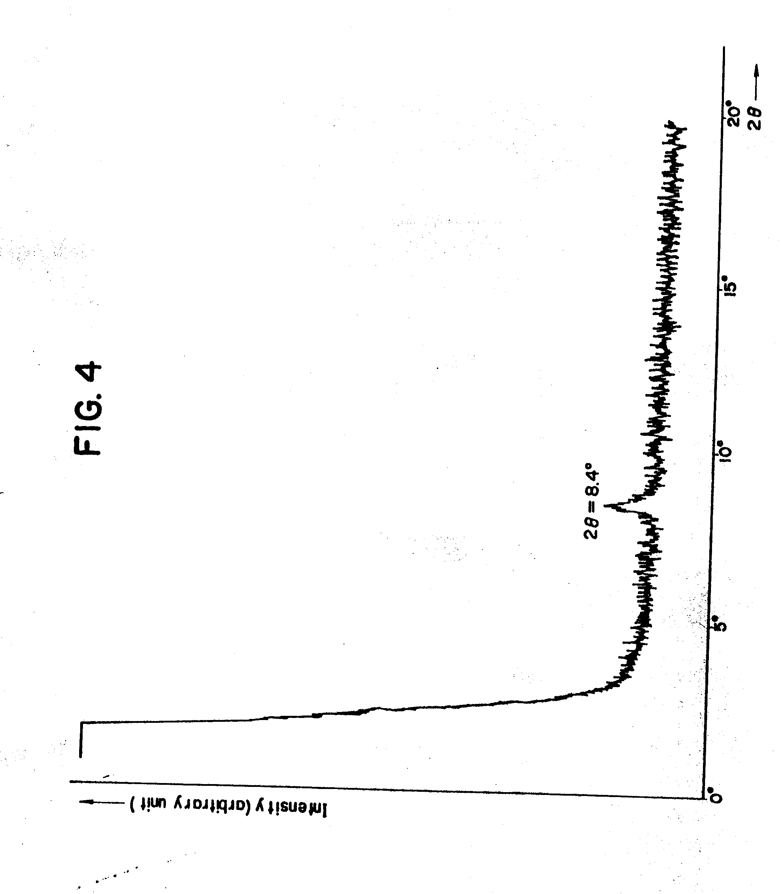

It was confirmed by a small angle X-ray diffraction analysis that the magnetic layer of Tb and Fe had a layered structure in which the rare earth metal Tb and the transition metal Fe were in the form of layers superposed alternately with each other. Figure 4 shows the small angle X-ray diffraction pattern using a Co-K$\alpha$ X-ray, in which $\theta$ is the angle between a layer surface and an incident X-ray. In Figure 4, a diffraction peak was recognized at $2\theta = 8.4^\circ$. It was deduced that one pitch P (formed of one rare earth metal Tb layer and one transition metal Fe layer) was 12.2 Angstroms, since the layer thickness or the pitch of the periodic structure can be calculated from the relationship: $2P \sin \frac{2\theta}{2} = \eta \lambda$.

Example 2

A magnetic layer formed of 21 atomic % of Tb and 79 atomic % of Fe was formed by using the sputtering apparatus of Figures 2 and 3, similarly to Example 1.

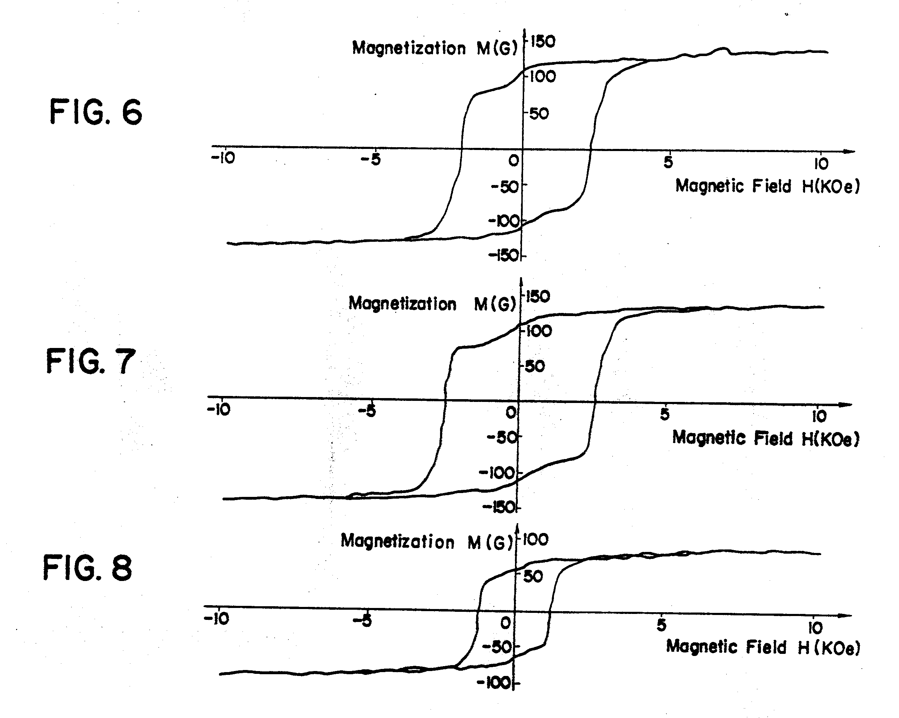

A number of magnetic layers were formed by changing the sputtering current for each target, resulting in the magnetic layer having various Tb layer thicknesses. Figure 5 shows the relationship between the Tb layer thickness and magnetic characteristics, namely magnetisation (Ms), coercive force (Hc) and the uniaxial anisotropy constant (Ku), for magnetic layers containing 19 atomic % and 21 atomic % Tb, respectively. In Figure 5, the dotted curves are characteristics of the magnetic layer containing 19 atomic % Tb, while the solid curves are characteristics of the magnetic layer containing 21 atomic % Tb as a whole. The curves K1 and K2 show the uniaxial anisotropy constant, the curves Ms1 and Ms2 show the magnetisation and the curves Hc1 and Hc2 show the coercive force.

From Figure 5, it can be seen that superior magnetic characteristics were obtained when the Tb layer thickness was not less than 2 Angstroms and not more than 6 Angstroms.

Figures 6 to 8 show magnetisation curves for different sample magnetic layers which were manufactured by changing the speed of rotation of the substrate with the sputtering currents of 0.6A for the Tb target and 1.85A for the Fe target which correspond to deposition rates of 1.5 Angstroms per second for Tb and 2.5 Angstroms per second for Fe, respectively. The layer thicknesses of the Tb and Fe layers, the magnetisation (Ms) and the coercive force (Hc) are shown in Table 1 below.

### Table 1

| Sample | Figure 6 | Figure 7 | Figure 8 |
| --- | --- | --- | --- |
| Tb layer thickness (Angstroms) | 1.5 | 4.5 | 9 |
| Fe layer thickness (Angstroms) | 2.5 | 7.5 | 15 |
| Ms (G) | 138 | 144 | 71 |
| Hc (KΘe) | 2.2 | 2.6 | 1.3 |

Of the samples, the magnetisation curve shown in Figure 7 shows superior magnetisation, coercive force and rectangular ratio to the curves shown in Figures 6 and 8. The magnetic layer of Figure 7 had a Tb layer thickness of 4.5 Angstroms, which is between 2 and 6 Angstroms.

Example 3

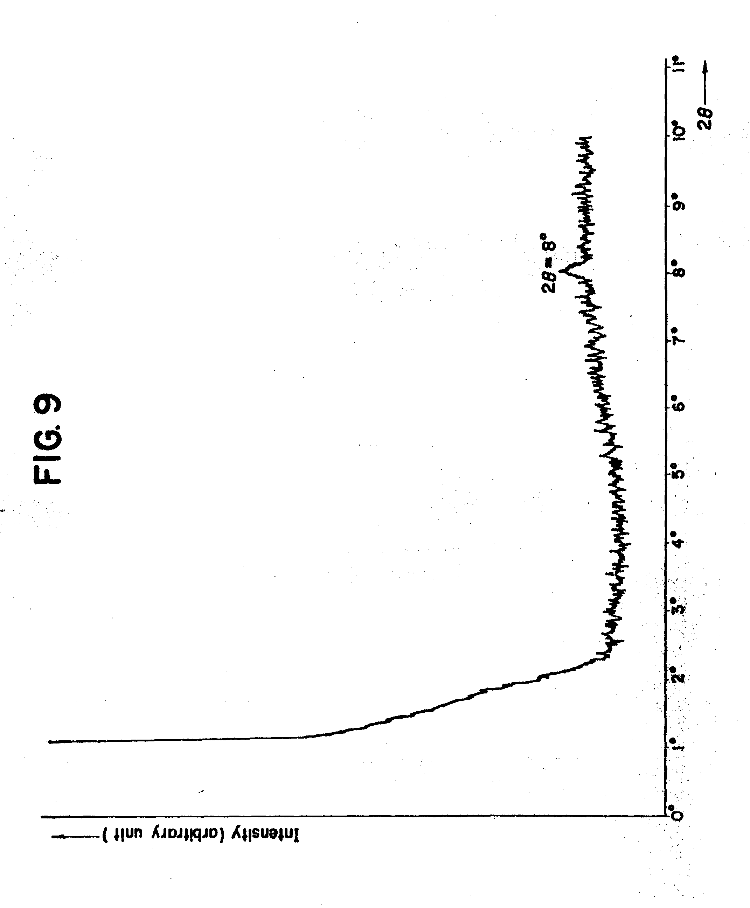

A magnetic layer was formed on a glass substrate by using the sputtering apparatus described above. The magnetic layer contained as a whole 20 atomic % of Tb and 80 atomic % of transition metal comprising Fe and Co with an atomic ratio of 19 : 1. The composition can be expressed as $Tb_{20}(Fe_{95}Co_5)_{80}$. In this example, the target 10 was formed of Tb, and the target 11 was formed of $Fe_{95}Co_5$ alloy. The sputtering was carried out with the substrate rotating at 20 revolution per minute and with sputtering currents of 0.6A for the Tb target and 2.2A for the FeCo target which resulted in deposition rates of about 1.4 Angstroms per second for Tb and about 2.6 Angstroms per second for FeCo, respectively. The result of a small angle X-ray diffraction analysis of the magnetic layer thereto obtained is shown in Figure 9. A diffraction peak was recognised at

$2\theta = 8^{\circ}$, which was interpreted as indicating that the pitch of the periodic layered structure was 12.9 Angstroms.

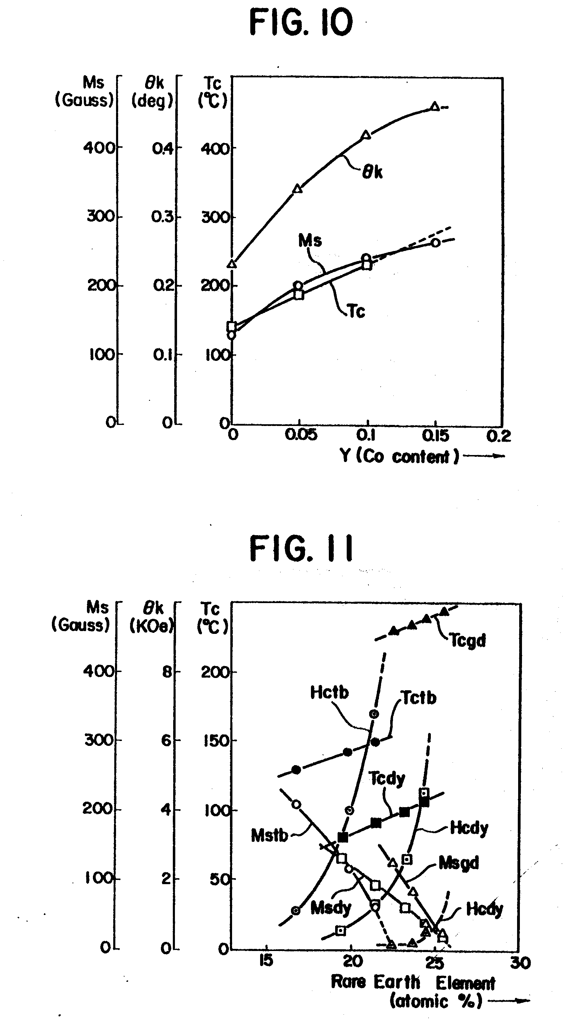

Figure 10 shows the relationship between the Co composition y, expressed as $Tb\text{-}Fe_{1-y}Co_y$, and various characteristics of the magnetic layer, namely the magnetisation (Ms), the Kerr rotation angle ($\theta$k) and the Curie temperature (Tc). It can be seen from Figure 10 that Ms and $\theta$k increased as the Co content increased, and Tc increased as the Co content increased. Thus, too much Co content requires larger recording power. It is preferable to select the Co content to be between 1 and 30 atomic % of the total amount of transition metal.

Example 4

A Gd-Fe magnetic layer was formed on a glass substrate by sputtering using a Gd target and an Fe target. The deposition rates were controlled to be 1.5 Angstroms per second for Gd and 2.6 Angstroms per second for Fe. The magnetic layer was confirmed by a small angle X-ray diffraction analysis to have a periodic layered structure of Gd and Fe layers having a pitch of 12.5 Angstroms.

Example 5

A Dy-Fe magnetic layer was formed on a glass substrate by sputtering using a Dy target and an Fe target.

Various characteristics of the magnetic layers according to Examples 1, 4 and 5 are shown in Figure 11, with respect to the respective rare earth metal contents.

In Figure 11, curves Hctb, Hcgd and Hcdy represent measured results of the coercive force upon compositional change of Tb, Gd and Dy, respectively. Curves Mstb, Msgd and Msdy represent saturation magnetisation, and curves Tctb, Tcgd and Tcdy represent Curie temperatures for Tb, Gd and Dy.

Example 6

A Gd-FeCo magnetic layer was made by sputtering, using a Gd target and an Fe-Co alloy target.

### Example 7

A GdTb-Fe magnetic layer was made by sputtering, using a $Gd_{20}Tb_{80}$ target and an Fe target.

### Example 8

A GdTb-FeCo magnetic layer was made by sputtering, using a $Gd_{20}Tb_{80}$ alloy target and an $Fe_{95}Co_5$ alloy target.

### Example 9

A TbDy-FeCo magnetic layer was made by sputtering, using a $Tb_{50}Dy_{50}$ alloy target and an $Fe_{90}Co_{10}$ alloy target.

The magnetic layer produced in each of Examples 6 to 9 was confirmed to have the layered structure, a sufficiently high coercive force and magnetisation and a suitable Curie temperature.

As explained above, the above-described embodiments of the present invention provide a magnetic layer suitable for magneto-optical recording in which rare earth metal layers and transition metal layers having thicknesses of the order of an atomic layer are alternately superposed.

## CLAIMS

1.    A magneto-optical recording medium comprising a substrate (1) and a magnetic layer (4) formed on the substrate, wherein the magnetic layer (4) is formed of multi-layers of rare earth metal element layers (2) and transition metal element layers (3) which are alternately superposed with each other, wherein each of the rare earth metal element layers (2) has a thickness of not less than 2 Angstroms but less than 6 Angstroms, and wherein the magnetic layer (4) has a composition containing 10 to 40 atomic % of the rare earth metal element or elements, and a residue of the transition metal element or elements, excluding a compensation composition of the rare earth element or elements and the transition metal element or elements.

2.    A magneto-optical recording medium according to claim 1, wherein the rare earth metal element layers (2) are formed of one or more of Tb, Gd and Dy.

3.    A magneto-optical recording medium according to claim 1 or claim 2, wherein the transition metal element layers (3) are formed of one or more of Fe, Co and Ni.

4.    A magneto-optical recording medium according to claim 3, wherein the transition metal element layers (3) are formed of Fe and Co and the Co content is between 1 and 30 atomic % of the total amount of Fe and Co.

# FIG. I

# FIG. 2

# FIG. 3

# FIG. 5

FIG. 4

Intensity (arbitrary unit)

$2\theta = 8.4°$

0°    5°    10°    15°    20°

$2\theta$

FIG. 6

FIG. 7

FIG. 8

0210855

FIG. 9

# FIG. 10

# FIG. 11